# EUROPÄISCHE PATENTSCHRIFT

(11) **EP 1 110 009 B1**
(45) Veröffentlichungstag und Bekanntmachung des Hinweises auf die Patenterteilung: **17.03.2004**
(21) Anmeldenummer: 99946165.0
(22) Anmeldetag: 13.09.1999
(51) Int. Cl.: F16D 59/02, F16D 51/04

(54) **RÜCKLAUFBREMSE**
BACK RUNNING BRAKE
FREIN RECUPERATEUR

(30) Priorität: 11.09.1998 AT 153798
(43) Veröffentlichungstag der Anmeldung: 27.06.2001
(73) Patentinhaber: Schukra-Gerätebau AG, 4060 Linz, Leonding (AT)
(72) Erfinder: Schuster, Wilhelm, Ing., 4030 Linz (AT)
(74) Vertreter: Banzer, Hans-Jörg, Dipl.-Ing.
(86) Internationale Anmeldenummer: PCT/EP1999/006747
(87) Internationale Veröffentlichungsnummer: WO 2000/015973

(56) Entgegenhaltungen:
- US-A- 3 447 643
- US-A- 4 591 029
- US-A- 4 742 896
- US-A- 5 007 511

## Beschreibung

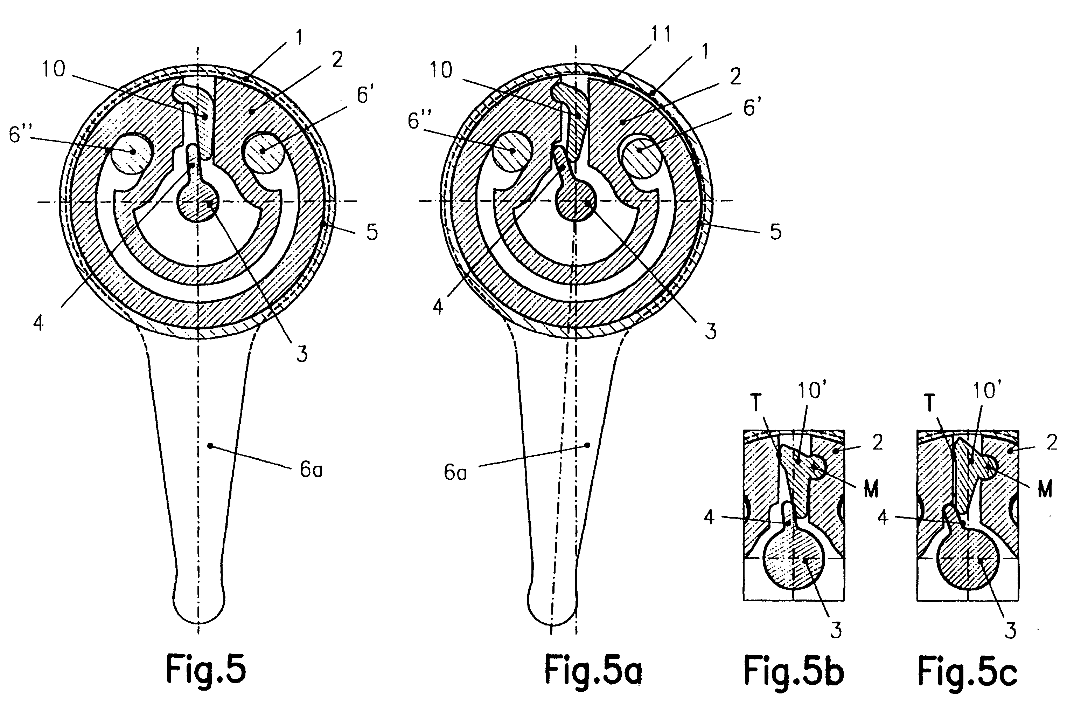

Die Erfindung betrifft Rücklaufbremsen, welche auch als Bremsantriebe bezeichnet werden können und auf vielen Gebieten der Technik einsetzbar sind, wie z. B. als Verstell- sowie Fixiereinrichtungen bei Maschinen, medizinischen Geräten und Apparaten, Sport- und Haushaltsgeräten, Steuermechanismen, für Sitz- und sonstige Möbeln, bei Fahrzeugen, Flugzeugen, Autositzen etc. Diese Rücklaufbremsen können sowohl durch ein Handrad 6 als auch durch einen Schalthebel (6a in Fig. 5) oder durch nicht dargestellte elektrische, pneumatische, hydraulische bzw. beliebige sonstige Schalt- oder Steuerelemente betätigt werden.

Bisherige Rücklaufbremsen haben u.a. als Bremskörper mehrgängige zylindrische Schraubenfedern, die sich entlang eines stillstehenden Trommelzylinders durch kreisförmigen Druck auf eines der beiden Federenden in einem stillstehenden Trommelzylinder (z.B. gegen den Uhrzeigersinn) von einer Federwindung zur anderen schrittweise aufweiten, bis alle Windungen schrittweise gegen die stillstehende Trommel verklemmt sind und ein Weiterverdrehen in derselben Richtung blockieren. Durch eine kreisrunde, also zirkulare Zug-Kraft am anderen Ende derselben Bremsfeder können (verständlicherweise nur mit einem Schlupf gegenüber der vorausgegangenen Zirkulardruckkraft am anderen Federende) die einzelnen Federwindungen schrittweise wieder auf einen kleineren Zylinderaußendurchmesser der Feder eingespult und das Verklemmen bzw. die Blockierung gegen ein Verdrehen der Feder und damit einer eventuellen Abtriebwelle schrittweise nur mit einem unerwünschten Schlupfweg aufgehoben werden.

Dieser tote Verdrehschlupf zwischen Lösen, Verdrehen und Blockieren bisheriger Rücklaufbremsen ist ein großer Nachteil gegenüber der vorliegenden Erfindung.

Ein weiterer Nachteil dieser mehrgängigen Federn ist, daß nur eine hauchdünne, kreisrunde, äußere Linie der einzelnen Schraubenfederwindungen also eine sehr kleine Fläche, an dem Gehäuseinnenzyinder anliegt, wodurch ein hochfestes Material wie Stahl oder dgl. als Feder und auch für die Bremstrommei verwendet werden muß (weil ein großer spezifischer Druck von der Mini-Reibfläche der Feder auf die Zylinder-Reibfläche ausgeübt werden muß).

Ein weiterer großer Nachteil ist, daß zwischen den hauchdünnen, tangential am Bremszylinder anliegenden schraubenförmigen Reibflächen jeder einzelnen Schraubenfederwindung zur nächsten "ein Vielfaches" an ungenütztem Raum und ungenützter Zylinderreibfläche des Gehäuses, also ungenützte Bremstrommelfläche zwischen den dünnen tatsächlichen Federreibflächen, vergeudet wird.

Eine ähnliche Raumvergeudung und unnötig erforderliche höchste Materialfestikeit (daher meistens Stahlausführung und teure, höchste Präzision) erfordern die bisher üblichen Rollen- oder Kugelfreilaufbremsen, die alle trotz größter erwünschter Brems- oder Blockierkraft nur mit materialmäßigen Punktauflagen arbeiten.

Backenbremsen haben u.a. den Nachteil, daß ihre zylindrischen Reibflächen gleichbleibend starr im Durchmesser und in der Krümmung mit der Gehäuseinnenzylinderkrümmung eine wirkliche, satte, am ganzen Bremsumfang gleichmäßig aufliegende, spezifische Druckkraft nicht erreichen oder über längere Zeit garantieren können. Aus diesem Grund müssen fast alle Backenbremsen ein zusätzliches, komprimierbares Material (die Bremsbeläge) zwischen der Backenbremsfläche und der Trommelinnenzylinderbremsfläche aufweisen, die auch bei längerem Gebrauch ausgewechselt werden müssen.

Aus der US-A-3,447,643 ist eine Rücklaufbremse mit einer mit einem Spreizring versehenen, selbstverstärkenden Bremse, deren Blockierung über ein radiales Zusammenziehen des Spreizrings wahlweise aufhebbar ist, bekannt. Diese Rücklaufbremse umfasst insbesondere eine Bremstrommel, an dem der Spreizring unter Spannung anliegt, wobei der Spreizring über seine Enden durch einen gehäusefesten Anschlag verstärkt an die Bremstrommel gedrückt wird. Durch Zusammenziehen der Enden des Spreizringes wird die Bremswirkung bzw. Blockierung des Spreizringes aufgehoben, so dass die auf einer Welle angebrachte Bremstrommel frei drehbar ist.

Aufgabe der Erfindung ist es, Rücklaufbremsen zu schaffen, die auf einfache und preisgünstige Weise durch ihre Konstruktion und optimale Bremsdruckverteilung auch in Kunststoff, Zink- oder Aluspritzguß, d.h. aus weniger festem Material (Teile 1 bis 6a) ausgeführt werden können und sowohl durch ein Handrad (6) als auch durch einen Schalthebel (6a der Fig. 5) oder durch nicht dargestelite elektrische, pneumatische, hydraulische, magnetische oder beliebige sonstige Schalt- oder Steuerelemente von der Primär- bzw. Antriebsseite her "unter Mitnahme der Abtriebsseite, z.B. Welle 3" nach beiden Richtungen hin, also auch gegen eine Sperr- oder Bremskraft, mit geringstern Schlupf zwischen primärer Drehbewegung (Einstellung oder Betätigung) und sekundärer Rücklaufsperre oder -bewegung, z.B. an einer Antriebs- oder Abtriebswelle 3, verstellt und fixiert werden können. Ein Vor- oder Rücklauf, jeder Drehbewegung der An- und Abtriebswellen kann jederzeit je nach Konstruktion und Einstellung, beliebig rasch und stark abgebremst oder total blockiert und wieder freigegeben werden. Die Nachteile oder Schwächen von Rücklaufbremsen und Freilaufbremsen nach dem derzeitigen Stand der Technik werden durch die gegenständliche Erfindung vermieden.

Diese Aufgabe wird durch eine Rücklaufbremse mit den Merkmalen des Anspruchs 1 gelöst.

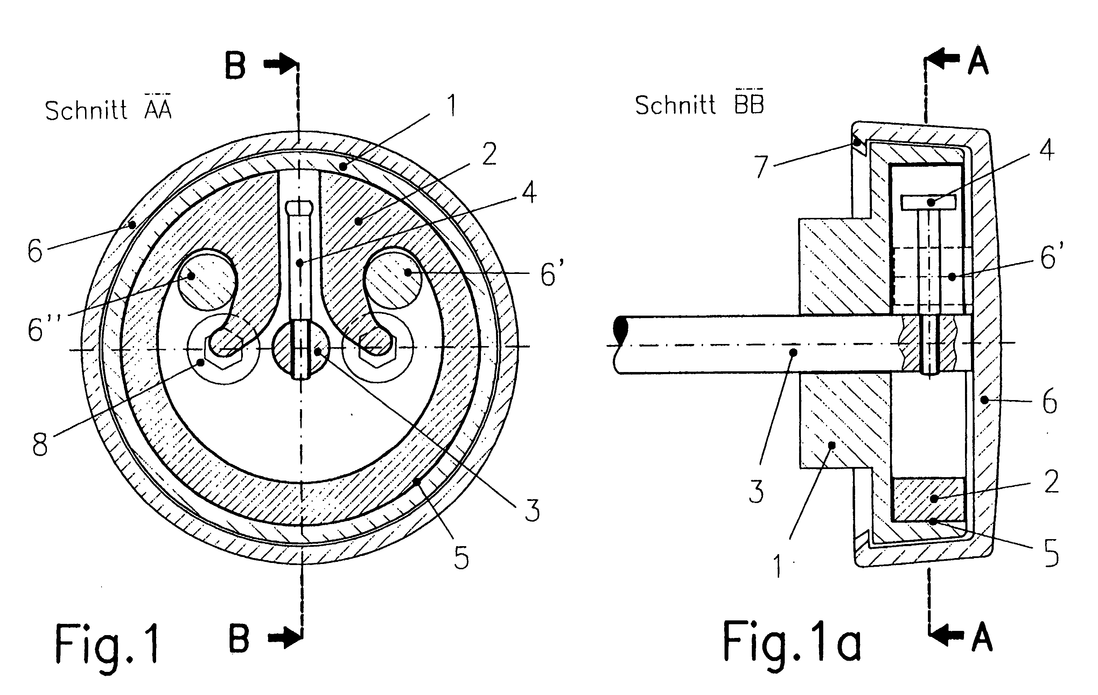

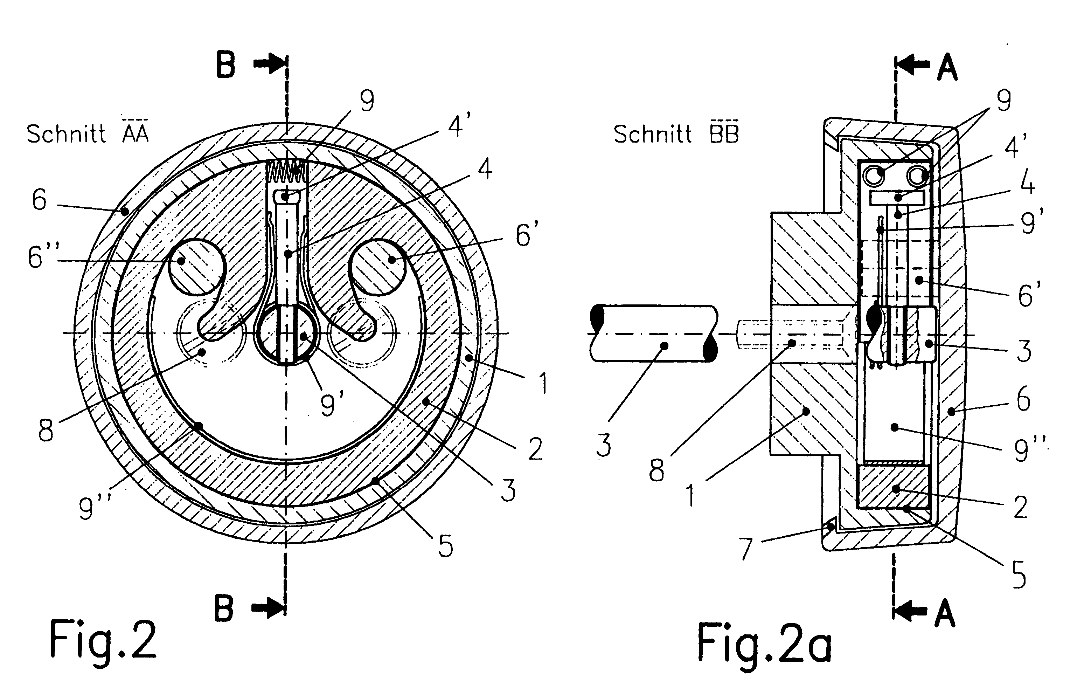

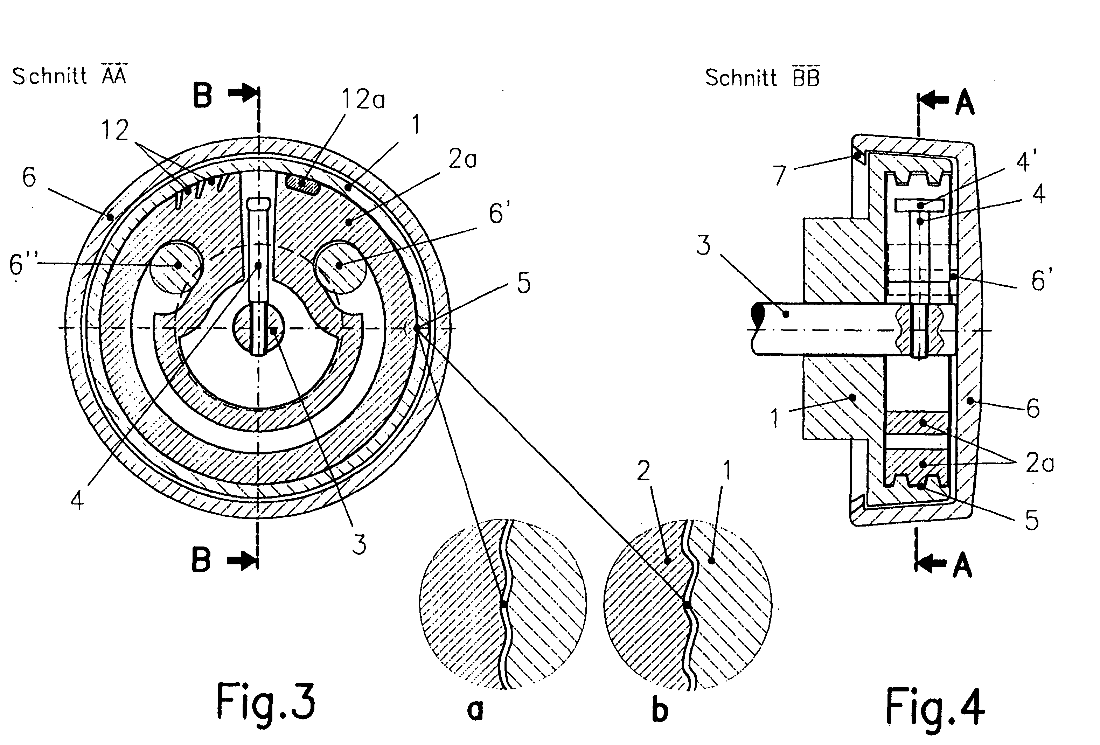

Vorteilhafte Ausgestaltungen der Erfindung sind in den Unteransprüchen wiedergegeben. Durch die Erfindung werden u. a. folgende Vorteile erzielt:
1. Beide "wirksamen" Bremszylinderflächen 5 sind um ein Vielfaches größer, weil sie ohne ungenützte Zwischenräume "ganzflächig" aneinander anliegen und daher zu. 100 % ausgenützt werden.
2. Dadurch ist der spezifische Flächendruck (pro mm2) so klein, daß auch Kunststoff-, Alu-, Zink- oder sonstige Spritzguß- bzw. weniger feste Materialien und günstigere Herstellmethoden für die Wirkelemente angewendet werden können
3. Der Spreizring 2 hat keinen Leerlauf (Schlupf) zwischen Sperren und Lösen, weil er sich nicht (wie eine Schraubenfeder) über mehrere Federwindungen ein- oder ausspulen muß, wenn er einmal an einem Bremszylinderende des Spreizringes einen kreisrunden Schub zum radialen Vergrößem des Durchmessers bzw. der Bremskraft und umgekehrt einmal zirkulare Zugkraft am anderen Teilkreisende des Bremszylinders zum Verkleinern des Spreizringdurchmessers und damit zum Lüften der Bremse zwecks Verstellmöglichkeit der Rücklaufbremse erhält.
4. Der ganze einstückige Spreizring (s. Figur 1) kann auch als Doppelring wie in Fig. 3 sowie mit und ohne Zusatzspreizfedern (9, 9', 9" s. Fig. 2) und auch mehrschichtig lamelliert ausgeführt werden und behält trotzdem alle Vorteile der neuen. Rücklaufbremse.
5. Der Spreizring 2, der mit seinem größeren Außenzylinderdurchmesser bei der Montage in den kleineren Innenzylinder der Bremstrommel 1 gezwängt wurde, hat (im Gegensatz zu starren Bremsbacken auf allen Punkten seines Reibzylinderumfanges zusätzlich zum normalen Anpreßdruck noch den aktiven Sprengdruck (Expansionsdruck) durch sein im innewohnendes Bestreben und seine gespeicherte Kraft, sich vom kleineren Radius in einen größeren Radius zu verwandeln. Allein durch die bisher genannten Vorteile haben die Rücklaufbremsen gemäß der vorliegenden Erfindung kaum mehr einen unerwünschten Schlupf zwischen Steuern und Blockieren bzw. Abbremsen, und zwar sowohl primär als auch sekundär, also auf der Eingangs- wie auf der Ausgangsseite.
6. Weitere Vorteile sind durch zusätzliche Steigerung der Bremskraft der Rücklaufbremse u.a. gegeben durch z.B.:
   a) keilnutenförmige Innen- und Außenflächen zwischen Spreizring und Gehäuse, (quer zur Zylinderfläche s. Fig. 4 auf den Bremsflächen 5), wodurch am gesamten Umfang wie bei einem Keilriemen eine zusätzliche Spreng- und Bremswirkung oder Blockade durch die Keilringe in den gegenüberliegenden Keilnuten entsteht.
   b) Durch symmetrische oder asymmetrische Mikro- oder Normal-Welligkeit einer oder beider Reibflächen, in Längsrichtung bzw. Drehrichtung der kreisrunden Bremsflächen ausgeführt (s. Fig. 3, Kreisbilder a und b), wird bei leichtestem Spreizen ein totaler Stillstand zwischen Trommel 1 und Spreizring 2 gegen ein Verdrehen und bei leichtem Komprimieren des Spreizringes wieder Gängigkeit erreicht.
   c) Durch eine solche oder anders verlaufende symmetrische oder asymmetrische Mikro- oder Makrowelligkeit einer oder beider Reiboberflächen kann ein Idealzustand für viele Zwecke z.B. derart erreicht werden, daß die Rücklaufbremse selbst (also schon ohne aber auch mit "Gegen-Drehmoment") z.B. in der Linksdrehung (oder Rechtsdrehung) ein größeres Bremsmoment aufweist als in der anderen Drehrichtung. Dadurch kann z.B. das Drehmoment zum Heben einer Kranlast kleiner als für das Rückspulen des Seilzuges oder sonstigen Antriebes gestaltet werden. Der Rücklauf ist von Haus aus schwergängiger als der Hebeoder Spannvorgang eines z.B. Seilzuges oder sonstigen Antriebes. Dies kann z.B. durch eine asymmetrische Sinuskurve oder dgl. erreicht werden, die in einer Drehrichtung sanfter, also flacher ist und in der Gegenrichtung steiler und daher mehr Bremskraft aufweist.
   d) Wenn die Drehrichtung bekannt ist, in der die Rücklaufbremse bremsen oder blockieren soll, dann kann an jenem Ende der Spreizringreibfläche, die der Druckstelle des Mitnehmerzapfens 4 auf die Zirkularstirnfläche des Ringes 2 gegenüberliegt und nicht durch den Teil 4 selbst geschoben wird, eine Starthilfe zum Bremsbeginn nach einem Lüftvorgang, also eine Bremshilfe für den Übergang von der gelüfteten Spreizringstellung zur gespreizten, eingebremsten oder blockierten Einstellung (ähnlich einem Trimmruder bei Schiffen, Flugzeugen etc.) durch Startbremshilfen (s. Fig. 3, Teile 12 und 12 a) gegeben werden.

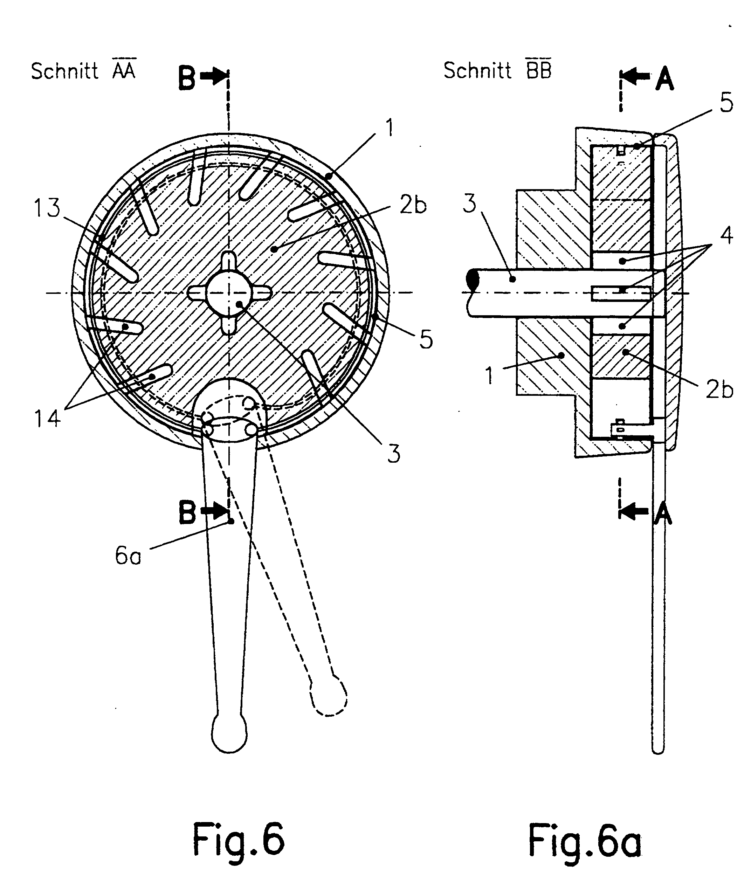

   Die Teile 12 sind über den Bremszylinder des Spreizringes 2 hinaus leicht vorstehende Rippen, die sich nach dem Lüften bei neuertichem Brems- oder Blockierwunsch, durch ihr vorzeitiges Berühren des Bremstrommelinnenzylinders 5 (und auch noch durch ihr zusätzliches Verkanten) als erste Teite des Spreiznnges 2 zu bremsen beginnen. Dadurch wird wie bei einer Kettenreaktion der restliche Kreisbogen und Bremsfläche noch schneller und heftiger zum satten Anliegen und Verspreizen des ganzen Ringes oder Blockieren desselben gebracht.
   Ähnlich wirken die Startbremshilfen 12 a. Sie sind eine oder mehrere zusätzliche, eingelegte oder aufvulkanisierte, geklebte, getauchte Beschichtungen mit Materialien, die leicht vorstehen und einen höheren Reibkoeffizienten aufweisen.
7. Ein Spreizkörper (s. Fig. 6b), der aus leicht elastischem Material hergestellt und ebenfalls mit Durchmesserübermaß in die Bremstrommel 1 eingezwängt worden ist und nur Gegendrehmomente in "eine" Drehnchtung abfangen kann, läßt sich durch einen Schwenkhebel 6a in beiden Richtungen (also auch gegen die Sperre) dann verdrehen, wenn durch das Betätigen des Hebels oder eines übergestülpten Handrades etc. ein Schrumpfring 13 im Durchmesser so weit verkieinert wurde, bis der elastische Spreizkörper 2b mit seinen Segmenteinschnitten 14 durch den eingegossenen oder in einer Nut aufliegenden Schrumpfring 13 bis zum Lockern oder Lüften im Durchmesser so verkleinert wurde, daß sich der Schwenkhebel 6a mitsamt dem Spreizkörper 2b in der stillstehenden Bremstrommel 1 verdrehen läßt, der dann seinerseits die Abtriebswelle 3 mitnimmt.
8. Zur Steigerung der Spreizkraft der Spreizringe 2 können Spreizkraftverstärker (in den Fig. 5, 5a und 5 b Teile 10) eingesetzt werden, die durch das Gegendrehmoment der Abtriebswellen 3 die Brems- bzw. Blockierkraft des Spreizringes verstärken. Durch z.B. Entspreizelemente, wie z.B. die beiden Entspreizzapfen 6' und 6", die z.B. mit einem Entspreizschwenkhebel 6a fix verbunden oder einstückig mit demselben sind, können sowohl der Spreizring 2 als auch Spreizkraftverstärkerhebei 10 oder -exzenter 10' und auch die Welle 3 zurückgedreht, eine Entspreizluft 11 (Spiel zwischen Bremsinnen- und -außenzylinder) geschaffen und dann mit demselben Schwenkhebel 6a oder statt dessen einem übergestülpten Schwenkhandrad (mit gleichen Entspreizzapfen 6' und 6" auch die Drehlage der Welle 3 über ihren Mitnehmerzapfen 4 nach beiden Drehrichtungen hin verstellt und wieder fixiert werden.
9. Das sekundäre Rücklaufdrehmoment drückt über die Welle 3 und deren Mitnehmerzapfen 4 kreisförmig ausschließlich auf die Innenstimseite des Spreizringes 2, daß er nur radial auf die Stirnseite der Spreizringenden schiebend bzw. drückend ein Drehmoment auf den Spreizring ausführen kann. Dieser Kraftarmhebel kann sowohl durch das oder die Betätigungselemente zum Verstellen einer Antriebswelle als auch zum Zurückhalten einer Zirkularkraft, also zum Bremsen oder Blockieren eines Dehmomentes oder Verdrehen einer Welle verwendet werden.

Nachstehend wird die Erfindung anhand von Ausführungsbeispielen unter Bezug auf Zeichnungen näher erläutert. Es zeigt:
- Fig. 1: ein Ausführungsbeispiel einer Rücklaufbremse im Schnitt A-A gemäß Fig. 1a,
- Fig. 1a: das Ausführungsbeispiel gemäß Fig. 1 im Schnitt B-B der Fig. 1,
- Fig. 2: ein weiteres Ausführungsbeispiel einer Rücklaufbremse im Schnitt A-A gemäß Fig. 2a,
- Fig. 2a: das Ausführungsbeispiel gemäß Fig. 2 im Schnitt B-B der Fig. 2,
- Fig. 3: ein drittes Ausführungsbeispiel einer Rücklaufbremse im Schnitt A-A der Fig. 4,
- Fig. 3 a, b: Details aus Fig. 3 in vergrößerter Darstellung.
- Fig. 4: das Ausführungsbeispiel gemäß Fig. 3 im Schnitt B-B der Fig. 3,
- Fig. 5 a,b,c: ein viertes Ausführungsbeispiel einer Rücklaufbremse mit vergrößert dargestellten Details in verschiedenen Arbeitsstellungen,
- Fig. 6: ein fünftes Ausführungsbeispiel einer Rücklaufbremse im Schnitt A-A der Fig. 6a,
- Fig. 6a: das Ausführungsbeispiel gemäß Fig. 6 im Schnitt B-B der Fig. 6.

Die Rücklaufbremse ist als Ausführungsbeispiel in Fig. 1 bis Fig. 4 in den freien Innenraum eines üblicherweise hohlen Handrades (Teil 6) eingebaut, das beispielsweise auch zu einer Betätigung oder Verstellung eines Auto- oder Bürosessels oder einer beliebigen Maschine oder eines beliebigen Gerätes montiert sein kann oder mit weichem eine automatische, gegen Rücklauf oder Zurückspulen gebremste oder blockierte Drehkraft geführt werden soll.

Ein solches Handrad (Teil 6) oder ein solcher Verstellhebel (Teil 6a in Fig. 5) oder auch nur der Bremsantrieb allein (mit oder ohne sonstigen Betätigungselementen) kann ohne zusätzliche Lüftung einer Bremse oder Freilauf- oder sonstigen Bremse oder Blockierung nach beiden Drehrichtungen hin unter Mitnahme der Welle (Teil 3) verstellt werden. Beim Loslassen des Handrades oder des Hebels oder Betätigungselementes für die Rüchlaufbremse bremst oder sperrt sich derselbe automatisch; d.h. von der angetriebenen Welle 3 her kann die Rücklaufbremse (je nach Einstellung und/oder Konstruktion. Vorspannung, Materialanwendung usw.) nach dem Loslassen einer Verstellkraft nach einer Primärverstellung (durch das Handrad, den Heben usw.) nicht oder nur schwer gebremst die eingestellte Drehbewegung sekundär rückwirkend zurückdrehen. Die Rücklaufbremse kann aber auch innerhalb einer beliebigen Konstruktion an einem beliebigen Punkt einer Antriebs- oder Abtriebswelle (gegen äußeres Drehmoment abgestützt durch die Umgebung oder einen Seilzug, eine Speiche oder sonstige Verankerung) so angebracht sein, daß die primäre Verstelldrehkraft z.B. durch eine zweite (über einen Fortsatz der ersten Welle 3 gestülpte) nicht dargestellte, auf derselben Achse wirkende Hohlwelle oder in einem Winkel zur Hauptachse gelenkig weglaufende Verstellwelle, aber auch z.B. durch eine Seilspule und Bowdenzüge, Zahnrad- oder sonstige Antriebsmechanismen innerhalb eines Gerätes, Apparates, Möbels, Fahrzeuges etc. (primär also verstellend) wirken, wobei die abtreibende oder getriebene, abgehende Welle 3 mit der Primäreinstellung mit verstellt werden kann. Umgekehrt, also sekundär, kann diese Welle 3 jedoch nicht (oder je nach Einstellung nur mehr oder weniger erschwert) diesen Bremsantrieb verdrehen.

Fig. 1. zeigt im Schnitt A-A durch Fig. 1a ein Gehäuse 1 mit zylindrischer Innenfläche, die als Reib- (oder Brems-) Fläche 5 dient und den offenen Einfachspreizring 2, der seine zylindrische Reibfläche 5 an der Außenseite besitzt, aufnimmt. Der vorgegebene Außendurchmesser des Spreizringes 2 hat im nicht eingebauten Zustand einen größeren Außendurchmesser als die zylindrische Innenreibfläche 5 des Gehäuses 1. Nach dem Einbau des Spreizringes 2, durch Komprimieren (vorspannen) und Einlegen in das Gehäuse 1, pressen sich die Reibflächen 5 der beiden Bauteile 1 und 2 fest aneinander, wodurch eine Bremswirkung gegen das Verdrehen des Spreizringes 2 im stillstehenden Gehäuse 1 vorgegeben ist. Ein permanentes Drehmoment, das z.B. von einer über die Welle 3 einstellbaren Mechanik (nicht dargestellt) zurückwirkt, wird jedoch zusätzlich in jeder Stellung des Spreizringes 2 durch den Mitnehmerzapfen 4 gebremst bis gestoppt. Der Mitnehmerzapfen drückt mit seinem Anliegeteil 4' kreisförmig (zirkular) und kraftschlüssig auf die Radialstimfläche des offenen Spreizringes 2 und verstärkt somit noch sein vorgegebenes, innewohnendes Bremsdrehmoment bzw. die Bremswirkung zwischen Spreizring 2 und Gehäuse 1. Diese Bremskraft bzw. Blockierung wird jedoch geschwächt oder aufgehoben durch Verdrehen des Handrades 6 (mit seinen Entspreizzapfen 6', 6", die mit dem Handrad in einem Stück ausgeführt oder in ihm montiert sind). Diese Zapfen üben auf das andere offene Ende des Spreizringes 2 eine Zirkularzugkraft aus, die die Spreng- und Bremskraft des Spreizringes 2 mindert oder aufhebt. Das Handrad 6 kann dann die Blockade oder Bremswirkung in umgekehrter Reihenfolge über den Spreizring 2, den Anliegeteil 4', den Mitnehmer-Zapfen 4 und die Welle 3 aufheben und gestattet der ganzen Mechanik, d.h. dem Bremsantrieb, die Verdrehung und Einstellung in beiden Drehrichtungen (auch gegen eine Blockade).

Fig. 1 a zeigt Schnitt B-B durch das Zentrum des Ausführungsbeispiels gemäß Fig. 1. Das Zirkularzughandrad 6 ist über das Gehäuse 1 gestülpt und mit angeformten Einrastnasen 7 gegen ein Abziehen gesichert.

Fig. 2 und Fig. 2a zeigen eine Rücklaufbremse wie sie in Fig. 1 und Fig. 1a beschrieben ist, wobei jedoch die Eigenspreizkraft des Spreizringes 2 durch zusätzliche Spreizelemente, wie z.B. die dargestellten Federn 9, 9', 9" verstärkt sind, die gleichzeitig die Bremswirkung erhöhen. Als Beispiele von Spreizelementen sind drei Varianten dargestellt:
1. Die beiden Schraubenfedem 9 liegen zwischen den beiden radialen Stimseiten der Öffnung des Spreizringes 2.
2. Eine zweigängige Schraubenfeder 9', die um die Welle 3 gewickelt ist, und deren Enden verlängert sind, drückt mit diesen Enden ebenfalls gegen die beiden Stimseiten des Spreizringes 2.
3. Ein Federband 9", das vorgespannt eingerollt und auf der Innenseite des Spreizringes 2 eingelegt ist.

Eine nicht dargestellte Ausführung wäre z.B. ein expandierendes Material wie ein Gummi, Schaumstoff, ein Kunststoff, ein Luftpolster, Gasfedern etc., das in den Spreizring zur Erhöhung der Spreizkraft eingelegt werden kann.

In der Fig. 2a ist auch ein Beispiel für eine Befestigungsart der gesamten Rücklaufbremse durch den Boden des Gehäuses 1 mit Senkkopfschrauben 8 gezeigt, wobei die Darstellung der Welle 3 unterbrochen ist

Fig. 3 zeigt eine weitere Rücklaufbremse mit einem doppelten Spreizring 2, dessen innerer Ring zusätzlich eine Spreizkraft auf die Reibfläche 5 aufbringt. In den Ausschnittvergrößerungen a und b sind zwei beispielsweise Varianten der Gestaltung der Reib- oder Bremsflächen 5 dargestellt. Die beispielsweise Welligkeit beider Reibflächen 5 kann die gleiche oder eine verschiedene Struktur sowohl auf dem Gehäuse 1 als auch auf dem Spreizring 2 aufweisen und mikrofein oder grob und verschieden tief sein. Der Unterschied der zwei Beispiele ist, daß in Variante a der Wellengang symmetrisch gleichmäßig ist, so daß beim Bremsen und beim Verstellen in beiden Drehrichtungen der gleiche Widerstand entgegengesetzt wird, bei Variante b ist der Wellengang im Anstieg steiler als im Niedergang, so daß beim Bremsen und beim Verstellen in einer Richtung ein größerer und in der anderen Richtung ein geringerer Widerstand entgegengesetzt wird. Damit kann ein permanent oder pulsierend auf die Rücklaufbremse in einer Richtung rückwirkendes Drehmoment besser abgefangen gemlldert, egalisiert oder hinsichtlich des Aufwandes an Verstellkraft von teilweise bis ganz umgekehrt oder schon bei geringerer Spreizkraft auch total gestoppt werden. Durch die Gestaltung der Reibflächen wird zusätzlich zur Reibung und Spreizkraft die Bremswirkung verstärkt, weil ein weiterer Kraftaufwand zur Überwindung der Steigung notwendig ist und beim Überwinden jeder Welle der Spreizring 2 jeweils um die doppelle Wellenhöhe vorgespannt wird. Effektverstärkend wirkt auch, daß durch das jeweilige Einrasten in jedem Wellental die gleitende Reibung teilweise bis gänzlich in eine stehende Reibung verwandelt und damit der Reibungskoeffizient gegen den Beginn eines Zurückdrehens vergrößert wird.

Fig. 3 zeigt auch Bremsstarthilfen 12 und 12a, die nur einzein angebracht werden und nur in einer Drehrichtung nach dem Lüftvorgang das Spreizen des Spreizinges (wie ein Trimmruder bei Schiffen) einleiten, wenn sie an der anderen, nicht geschobenen Spreizringstimseite (durch leichtes Vorstehen über den Bremszylinder oder durch Spezialbremsmaterial) wirken.

Fig. 4 zeigt eine keilnutförmig ineinandergreifende Ausgestaltung beider Reibflächen 5, am Gehäuse 1 und am Spreizring 2. Dies vergrößert einerseits die Reibfläche insgesamt und andererseits die Bremswirkung durch das ineinander Eingreifen (Verkeilen) der jeweiligen Nut mit dem entgegenstehenden Keil. Die umlaufenden Keilnuten können auch als Gewindegänge zum Ineinanderschrauben des Spreizringes 2 (Spreizkörpers) in ein mutterartiges Gehäuse 1 ausgeführt sein.

Fig. 5 zeigt eine Rücklaufbremse mit Doppelspreizring 2 und einen Entspreizschwenkhebel 6a, der einstückig oder fest verbunden mit ihm zwei Entspreizzapfen 6', 6" besitzt. Die Welle 3 hat (einstückig mit ihr verbunden oder losezum Eingreifen) einen Mitnehmer 4, dessen Ende in die Öffnung des Spreizringes 2 eingreift und ein über die Welle rückwirkendes Drehmoment auf einen Spreizhebel 10 überträgt.

Dieser spreizt den Spreizring 2 zusätzlich zu der ihm schon innewohnenden eigenen Spreizkraft (oder auch bei Fehlen oder Erschlaffen einer solchen) über die beiden z.B. radialen Stimflächen des Spreizringes 2 innerhalb des Gehäuses 1, wodurch die Bremswirkung bis zur Blockade erhöht werden kann. Durch Schwenken des Hebels 6a (gleich in welcher Drehrichtung) wird der Doppelspreizring 2 durch die zwei in ihrem Abstand zueinander und zum Schwenkhebei 6a, z.B. durch einstückige Ausführung aller drei Elemente, fixierte, mit dem Schwenkhebel 6a mitschwenkenden Entspreizzapfen 6' und 6" zu einem kleineren Außendurchmesser komprimiert, wodurch die Spreizkraft und Bremswirkung aufgehoben bzw, reduziert wird. Der Schwenkhebel schwenkt immer um die Entspreizzapfen 6' oder 6" als Drehpunkt, der auf derselben Schwenkrichtung des Hebels sitzt.

Fig. 5a zeigt: den Schwenkhebel um den Mittelpunkt und Drehpunkt des Zapfens 6" geschwenkt. Er hat den gegenüberliegenden Entspreizzapfen 6' um denselben Mittelpunkt 6" mitgenommen. Dadurch wird der gesamte Spreizring 2 durch diese kreisrunde Exzenterbewegung und Keilwirkung zwischen den beiden Zapfen 6' und 6" mit großer Übersetzung durch den Hebel 6a "gegen eigene und fremde Spreizkräfte" wieder zu einem kleineren Durchmesser komprimiert (oder entspreizt) (siehe Luftspalt 11). Auch der Spreizverstarkerhebel 10 wird durch die beiden eigenen Stimflächen des wieder komprimierten Spreizringes 2 (gemeinsam mit der Abtriebswelle 3 - über ihren Mitnebmer 4) - zurückgedreht. Nun kann die gesamte Rückfaubremse mitsamt der Welle 3, gegen oder mit einem vorhandenen Gegendrehmoment auf der Abtriebseite nach beiden Seiten hin verdreht bzw. verstellt werden. Bei Loslassen des Schwenkhebels 6a verspreizt sich sofort wieder der Spreizring 2, verstärkt oder nicht verstärkt z.B. durch einen Spreizverstärkerhebel 10 und bremst oder blockiert, je nach Konstruktion, Ausführung, Absicht, den verwendeten Materialien etc., ein Rückdrehen durch die Abtriebswelle 3 bzw. ein Gegendrehmoment.

Der Schwenkhebel 6a kann auch durch ein über die gesamte Rücklaufbremse gestülptes Handrad 6 ohne Hebel - wie in den Figuren 1 und 1a, 2 und 2a sowie 3 und 4-ausgeführt werden, wenn zwischen dem Innenzylinder des Handrades 6 und dem Außenzylinder des Gehäuses 1 genügend Spiel zum leichten Verschwenken um einen der beiden Zapfen 6' oder 6" - statt um ein Verdrehen um den zentralen Mittelpunkt - gelassen wird.

Fig. 5b und 5c zeigen je einen Spreizverstärkerhebel 10', der sich mit seinem Drehzapfenteil um seinen Drehpunkt M verdrehen kann, wenn von der Welle 3 her über ihren Mitnehmerzapfen 4 ein Gegendrehmoment von der Abtriebseite her drückt. Der Spreizverstärkerhebel in Fig. 5b hat dadurch z.B. bereits den Spreizverstärker 10' verdreht und seine Exzenterkreisteilfläche spreizt zusätzlich auch die Gegenfläche desselben Spreizringes 2 im Berührungspunkt der Tangente T auseinander und drückt zusätzlich das Ende des Spreizringes 2 mit diesem Übersetzungshebel 10' noch mit seiner Reibfläche an die Gehäusezylinderfläche. Die Fig. 5c zeigt, daß der Spreizverstärker 10' wieder in umgekehrter Reihenfolge um den Drehpunkt M zurückgedreht wird, wenn der Spreizring 2 (wie in Fig. 5a beschrieben) durch einen Übersetzungsschwenkhebei 6a entspreizt, d.h. wieder zu einem kleineren Durchmesser komprimiert wird.

Fig. 6 und Fig. 6a zeigen einen Elastikspreizring 2b aus einem etwas elastischen Material, dessen Außenzylinder im Durchmesser wie bei den vorhengen Spreizringen 2 und 2a vor der Montage größer ist als der Innendurchmesser des Zylinders des Gehäuses 1. Nach der Montage, d.h. nach dem Hineinzwängen dieses Elastikspreizringes in das Gehäuse entsteht ebenfalls bereits eine "Eigenspreiz- bzw. Eigenbremskraft", die in einer Drehrichtung kleiner und in der anderen wesentlich größer ist. Durch schräge Einschnitte 14 werden durch ein Verschwenken (Kippen) der dazwischenliegenden Segmentteilstücke um ihre Wurzel bei einem Gegendrehmoment gegen die Einschnitte 14 zusätzlich zur Eigenspreiz- und -bremskraft wieder viele einzeine "Kippspreizbremskräfte" bis zur totalen Blockade geschaffen. Ein oder mehrere am oder knapp unter dem Bremszylinderumfang des Elastikspreizringes 2b angeordnete kreisrunde Schrumpfringe 13 können durch Zusammenschnüren und Verkürzen ihres Kreisumfanges, z.B. mit Hilfe des dargestellten Schwenkhebels 6a ihren eigenen Durchmesser und den Elastikspreizringdurchmesser verkleinern. Hiedurch wird auch die Brems- oder Blockierkraft des Elastikspreizringes 2b verkleinert und ein Verstellen der ganzen Rücklaufbremse mitsamt der im Spreizring 2b verankerten Abthebswelle 3 in beiden Drehrichtungen und auch gegen die Segmentteilstücke und Blockierkraft möglich.

Die Rücklaufbremse kann mit oder ohne Wenden des oder der Spreizringe in beiden Drehrichtungen bremsen und/oder blockieren und auch bei Überlast nur zurückgleiten aber ohne Bruch neu beginnen.

Die Rücklaufbremse oder nur die Antriebswelle kann direkt oder indirekt durch Wirkelemente heben, spannen, ziehen, drücken, wölben, andere Teile verstellen und alles wieder fixieren bzw. blockieren bzw. sperren.

## Patentansprüche

1. Rücklaufbremse mit einer mit einer Abtriebswelle versehenen Bremstrommel (1), in deren Innenraum ein vor dem Einbau im Durchmesser größerer Spreizring (2) angeordnet ist, welcher nach dem Einbau durch seine Expansionskraft an einer an seiner Außenseite vorgesehenen Reibfläche (5) eine Eigenexpansionsreibung gegenuber einer an einer Innenfläche der Bremstrommel (1) vorgesehenen weiteren Reibfläche (5) gegen Verdrehen aufweist,
wobei die Bremstrommel (1) gegen ein Verdrehen gesichert ist und wobei bei Auftreten eines Rücklaufdrehmomentes an der Abtriebswelle (3) über deren Mitnehmerzapfen (4) und dessen zirkulare Schubkraft auf eine der beiden Stimseiten des Spreizringes (2) eine zusätzliche Spreiz- und Bremsverstärkung bis zu einer eventuellen Totalsperre aufgebracht wird, die durch Verdrehen des Primärhandrades (6) oder entspreizschwenkhebels (6a) auf der Eingangsseite, mit Hilfe der beiden fest an ihnen angebrachten Entspreizzapfen (6' und 6") wieder durch eine zirkulare Zugkraft auf die gegenüberliegende Stirnseite des Spreizringes (2) diesen derart zusammenzieht, daß die Bremsreibung oder gar Blockade wieder aufgehoben und eine Verstellung sowie Fixierung der ganzen Rücklaufbremse in beiden Drehnchtungen auf der Eingangssowie Ausgangsseite jederzeit wieder möglich ist.
-

2. Rücklaufbremse nach Anspruch 1, **dadurch gekennzeichnet, daß** die Expansionskraft des oder mehrerer Spreizringe (2) durch kompressible Spreizmittel (9, 9', 9") verstärkt wird.

3. Rücklaufbremse nach Anspruch 1 oder 2, **dadurch gekennzeichnet, daß** der Spreizring (2) aus zwei ineinander angeordneten Spreizringen (2, 2a) besteht.

4. Rücklaufbremse nach einem der Ansprüche 1 bis 3, **dadurch gekennzeichnet, daß** die Reibflächen (5) zylindrisch oder kegelig ausgeführt sind.

5. Rücklaufbremse nach einem der Ansprüche 1 bis 4, **dadurch gekennzeichnet, daß** die Reibflächen (5) in der Bremstrommei (1) und an de Außenseite des Spreizringes (2) in Drehrichtung synchron zur Erzielung eines gleichgroßen oder je nach Drehrichtung verschieden großen Brems-oder Reibwiderstands eine symmetrische bzw. asymmetrische mikro- oder makrowellenförmige Reiboberfläche aufweisen.

6. Rücklaufbremse nach einem der Ansprüche 1 bis 5, **dadurch gekennzeichnet, daß** die Bremsflächen (5) zur Erhöhung der Bremskraft kreisrunde Keilnuten und Keilvorsprünge mit Keilnuten und kreisrunde Keilrippen aufweisen.

7. Rücklaufbremse nach einem der Ansprüche 1 bis 6, **dadurch gekennzeichnet, daß** der Spreizring (2b) mindestens teilweise aus leicht elastischem Material mit großem Reibwiderstand hergestellt ist und/oder mit durch Einschnitte (14) und durch Verkeilen der verbleibenden Segmente zum zusätzlichen Bremsen oder Blockieren versehen ist

8. Rücklaufbremse nach einem der Ansprüche 1 bis 7, **dadurch gekennzeichnet, daß** ein oder mehrere Teile der Spreizringreibfläche (5) durch Einschnitte (12) oder Vorsprünge gegenüber der übrigen Außenseite der Spreizrings vorstehen und zuerst bremsend wirken.

9. Rücklaufbremse nach einem der bisherigen Ansprüche 1 bis 8, **dadurch gekennzeichnet, daß**, auch um bei kleinerer Spreizkraft eine totale Rücklaufsperre zu erreichen, die Reibfläche (5) der Bremstrommel (1) oder die Reibfläche (5) des Spreizrings (2) zur Gänze oder teilweise mit einem Material mit größerem Reibungswiderstand versehen sind.

10. Rücklaufbremse nach etnem der Ansprüche 1 bis 9, **dadurch gekennzeichnet, daß** mit dem Handrad (6) oder dem Schwenkhebel (6a) zwei Zapfen (6'und 6") verbunden sind, obei bei Betätigung des Handrades, das mit vergrößertem Zwischenraum zur Bremstrommel (1) angeordnet ist, bzw. des Schwenkhebels (6a), diese je nach Drehrichtung um einen der beiden Zapfen (6' oder 6") derart gedreht oder geschwenkt werden, daß durch den gleichbleibenden Abstand der beiden Zapfen zwangsläufig der Spreizring (2) zusammengezogen und dadurch die Spreizkraft sowie Reibung an der Reibfiäche (5) durch Verkleinerung des Spreizringdurchmessers verringert oder aufgehoben wird.

11. Rücklaufbremse nach einem der Ansprüche 1 bis 10, **dadurch gekennzeichnet, daß** ein zusätzlicher Spreizverstärkerhebel (10 oder 10') zur Verstärkung der Spreizkraft des Spreizringes bei Auftreten einer Rückdrehkraft durch die Welle (3) und zu einer Rücklaufbremsung, je nach Planung und Einstellung des Bremsantriebes, bis zu einer Rücklaufsperre, vorgesehen ist.

## Claims

1. Back-running brake with a brake drum (1) fitted with an output shaft, in the interior of which drum is arranged an expanding ring (2) which before installation has a larger diameter and after installation, due to its expansion force on a friction surface (5) provided on its outside, has an inherent expansion friction against twisting in relation to a further friction surface (5) provided on an inner surface of the brake drum (1), where the brake drum (1) is secured against twisting and where, on occurrence of a return twist movement on the output shaft (3) via its carrier peg (4) and its circular thrust force on one of the two faces of the expanding ring (2), an additional expansion and braking amplification is applied up to possibly total blocking, which amplification by twisting the primary handwheel (6) or contraction swivel lever (6a) on the input side, by means of the two contraction pegs (6' and 6") attached firmly thereto, again by a circular traction on the opposing side of the expanding ring (2), contracts this again such that the braking friction or blockade is released again and adjustment or fixing of the entire back-running brake is possible again at any time in both directions of rotation on the input and the output side.

2. Back-running brake according to Claim 1, **characterised in that** the expansion force of the one or more expanding rings (2) is amplified by compressible expanding means (9, 9', 9").

3. Back-running brake according to Claim 1 or 2, **characterised in that** the expanding ring (2) comprises two expanding rings (2, 2a) arranged one inside the other.

4. Back-running brake according to any of Claims 1 to 3, **characterised in that** the friction surfaces (5) are designed cylindrical or tapered.

5. Back-running brake according to any of Claims 1 to 4, **characterised in that** the friction surfaces (5) in the brake drum (1) and on the outside of the expanding ring (2), in the direction of rotation and in synchrony have a symmetrical or asymmetric micro- or macro-corrugated friction surface to achieve a braking or friction resistance of equal or different size depending on direction of rotation.

6. Back-running brake according to any of Claims 1 to 5, **characterised in that** to increase the braking force, the braking surfaces (5) have circular round keyways and splines with keyways and circular round ribs.

7. Back-running brake according to any of Claims 1 to 6, **characterised in that** the expanding ring (2b) is made at least partly of easily elastic material with a large frictional resistance and/or is fitted with cut-outs (14) and wedges of the remaining segments for additional braking or blocking.

8. Back-running brake according to any of Claims 1 to 7, **characterised in that** one or more parts of the expanding ring friction surface (5) protrude through cut-outs (12) or projections in relation to the outside of the expanding ring and first have a braking effect.

9. Back-running brake according to any of the previous Claims 1 to 8, **characterised in that** also to achieve a total back-running block even at a lower expansion force, the friction surface (5) of the brake drum (1) or the friction surface (5) of the expanding ring (2) is fitted fully or partly with a material with a greater frictional resistance.

10. Back-running brake according to any of Claims 1 to 9, **characterised in that** two pegs (6' and 6") are connected with the handwheel (6) or swivel lever (6a), where on activation of the handwheel, which is arranged with an enlarged gap from the brake drum (1), or the swivel lever (6a), these are turned or swivelled depending on the direction of rotation about one of the two pegs (6' or 6") such that the constant spacing of the two pegs necessarily contracts the expanding ring (2) and hence the expansion force and friction on the friction surface (5) are reduced or eliminated by a reduction in the diameter of the expanding ring.

11. Back-running brake according to any of Claims 1 to 10, **characterised in that** an additional expansion amplifier lever (10 or 10') is provided to amplify the expansion force of the expanding ring on occurrence of a return twist force through the shaft (3) and for back-running braking, depending on the flatness and setting of the brake drive, as far as a back-running block.

## Revendications

1. Frein récupérateur comprenant un tambour de frein (1) muni d'un arbre de sortie, dans l'espace interne duquel un anneau d'écartement (2) de diamètre supérieur est disposé avant le montage, qui, après le montage, au moyen de sa force d'expansion sur un frottoir (5) prévu sur son côté externe, comporte un dispositif d'auto-expansion par frottement face à un autre frottoir (5) prévu sur un côté interne du tambour de frein (1) pour éviter les décalages, dans lequel le tambour de frein (1) est protégé contre un décalage et dans lequel, en cas de moment de rotation en sens inverse exercé sur l'arbre de sortie (3), un renforcement supplémentaire de l'écartement et du freinage jusqu'au blocage total éventuel est appliqué au moyen de ses pivots d'entraînement (4) et de sa force de poussée circulaire sur une des deux faces avant de l'anneau d'écartement (2), lequel renforcement resserre encore celui-ci par décalage d'un volant primaire (6) ou d'un bras mobile anti-écartement primaire (6a) sur le côté de l'entrée, à l'aide des deux pivots anti-écartement (6' et 6'') fixés solidement sur ceux-ci au moyen d'une force de traction circulaire sur la face avant opposée de l'anneau d'écartement (2), de façon à ce que le frottement de freinage ou même un blocage soit à nouveau évité et qu'un réglage ainsi qu'une fixation de tout le frein récupérateur dans les deux sens de rotation sur le côté d'entrée ainsi que sur le côté de sortie soit à nouveau possible.

2. Frein récupérateur selon la revendication 1, **caractérisé en ce que** la force d'expansion du ou de plusieurs anneaux d'écartement (2) est renforcée par des dispositifs d'écartement (9, 9', 9") compressibles.

3. Frein récupérateur selon l'une des revendications 1 ou 2, **caractérisé en ce que** l'anneau d'écartement (2) est composé de deux anneaux d'écartement (2, 2a) emboîtés l'un dans l'autre.

4. Frein récupérateur selon l'une des revendications 1 à 3, **caractérisé en ce que** les frottoirs (5) sont de forme cylindrique ou sphérique.

5. Frein récupérateur selon l'une des revendications 1 à 4, **caractérisé en ce que** les frottoirs (5) dans le tambour de frein (1) et sur les côtés externes de l'anneau d'écartement (2) pour atteindre une résistance au freinage ou au frottement identique synchrone au sens de rotation, ou une résistance au freinage et au frottement différente selon le sens de rotation, comportent un frottoir symétrique ou asymétrique de forme micro ou macro-onde.

6. Frein récupérateur selon l'une des revendications 1 à 5, **caractérisé en ce que** les frottoirs (5) comportent, pour augmenter la force de freinage, des rainures de clavetage circulaires et des emboîtements de clavetage avec rainures de clavetage et des nervures de clavetage circulaires.

7. Frein récupérateur selon l'une quelconque des revendications 1 à 6, **caractérisé en ce que** l'anneau d'écartement (2b) est fabriqué au moins en partie avec un matériau légèrement élastique présentant une forte résistance au frottement et/ou est prévu avec des encoches (14) et par le clavetage des segments restants pour un freinage ou un blocage supplémentaire.

8. Frein récupérateur selon l'une quelconque des revendications 1 à 7, **caractérisé en ce que** une ou plusieurs parties du frottoir (5) de l'anneau d'écartement font saillie à l'aide des encoches (12) ou des emboîtements dans le côté externe de l'anneau d'écartement restant et agissent d'abord comme dispositif de freinage.

9. Frein récupérateur selon l'une quelconque des revendications 1 à 8, **caractérisé en ce que**, même pour atteindre un blocage total du retour en cas de force faible d'écartement, le frottoir (5) du tambour de frein (1) ou le frottoir (5) de l'anneau d'écartement (2) est prévu en partie ou en totalité avec un matériau ayant une résistance au frottement très forte.

10. Frein récupérateur selon l'une des revendications 1 à 9, **caractérisé en ce que** deux pivots (6' et 6") sont reliés au volant (6) ou au bras mobile (6a), de sorte que, en cas d'actionnement du volant, qui est installé avec un espace agrandi par rapport au tambour de frein (1), et/ou du bras mobile (6a), ceux-ci sont tournés ou pivotés vers l'un des deux pivots (6' ou 6'') chacun selon le sens de rotation, de façon à ce que, dans l'écart toujours identique entre les deux pivots, l'anneau d'écartement (2) soit inévitablement comprimé et qu'ainsi la force d'écartement et le frottement sur les frottoirs (5) soient réduits ou augmentés par diminution du diamètre de l'anneau d'écartement.

11. Frein récupérateur selon l'une des revendications 1 à 10, **caractérisé en ce qu'**un levier de renforcement de l'écartement (10 ou 10') est prévu pour renforcer la force d'écartement de l'anneau d'écartement en cas de force de rotation en sens inverse sur l'arbre (3) et pour un freinage de récupération conformément au plan et à l'installation de l'entraînement de freinage, jusqu'à un blocage du retour.
